# EUROPEAN PATENT SPECIFICATION

(11) **EP 0 399 513 B1**
(45) Date of publication and mention of the grant of the patent: **18.01.1995**
(21) Application number: 90109839.2
(22) Date of filing: 23.05.1990
(51) Int. Cl.: G11B 21/08, G11B 21/10, G11B 20/12

(54) **Pit pattern detecting method**
Verfahren zur Erfassung von Pitmustern
Procédé de détection d'échantillons de cavités

(30) Priority: 24.05.1989 JP 128695/89
(43) Date of publication of application: 28.11.1990
(73) Proprietor: SONY CORPORATION, Tokyo (JP)
(72) Inventor: Tobita, Minoru, Shinagawa-ku, Tokyo (JP)
(74) Representative: TER MEER STEINMEISTER & PARTNER GbR

(56) References cited:
- EP-A- 0 278 006
- EP-A- 0 344 669
- EP-A- 0 348 949
- AT-B- 360 253

## Description

### BACKGROUND OF THE INVENTION

### Field of the Invention

This invention relates to a method for detecting pit patterns on a disk-shaped recording medium of a sampled servo system.

### Description of the Prior Art

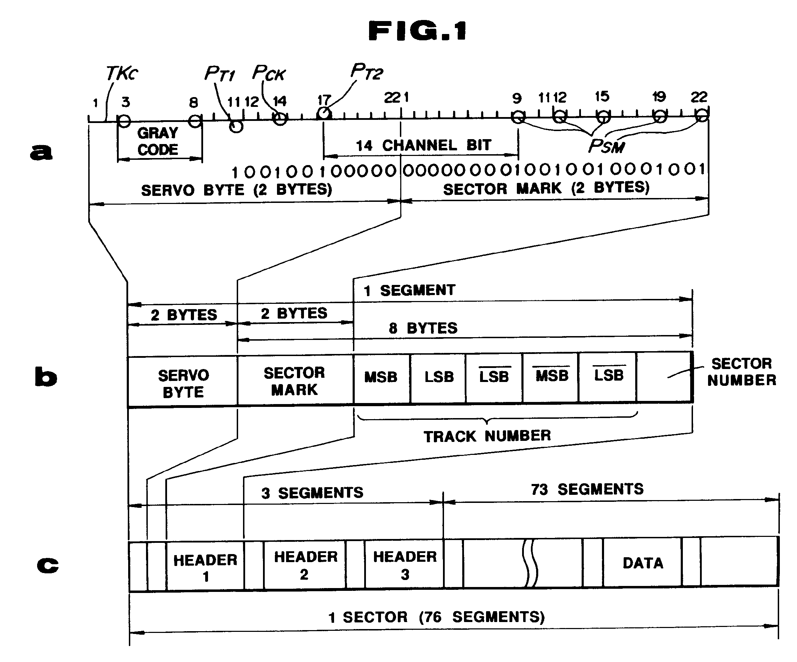

For a conventional disk-shaped recording medium, including an optical disk or a magneto-optical disk, such as, for example, a 3.5-inch magneto-optical disk, there has been proposed a recording format as shown for example in Fig. 1. For this recording format, a so-called 4-11 modulation system is employed, according to which one-byte or 8-bit data are recorded by a 11 channel bit pit pattern.

Referring to Fig. 1a, there is shown a 22 channel bit sector mark, corresponding to 2-byte of data, in continuation to a 22 channel bit servo bytes corresponding similarly to 2 byte of data, at the leading position of one sector. This is a pit pattern appearing at the leading portion of each sector, as will be described in more detail later. Referring to Fig. 1a, there are formed, in servo bytes, gray code pits, tracking pits P_{T1}, P_{T2}, wobbled with respect to a track center T_{kc}, and a clock pit P_{CK} constituting the servo bytes along with the tracking pits P_{T1}, P_{T2}, while there are formed, in a sector mark, sector mark pits P_{SM} constituting the sector mark after 14 channel bits after the tracking pit P_{T2} of the servo bytes.

As shown in a block format of Fig. 1b, the 2-byte servo bytes and the 2-byte sector mark constitute a segment along with track and sector numbers, such as MSBs and LSBs. The sector mark, track numbers and the sector numbers make up 8 bytes. Meanwhile, as shown in Fig. 1c, each sector is constituted by 76 segments, of which the leading three segments prove to be headers 1 to 3 and the remaining 73 segments prove to be data. The one segment shown in Fig. 1b is arrayed at the formost one segment of the sector, that is at the header 1, as shown in Fig. 1c.

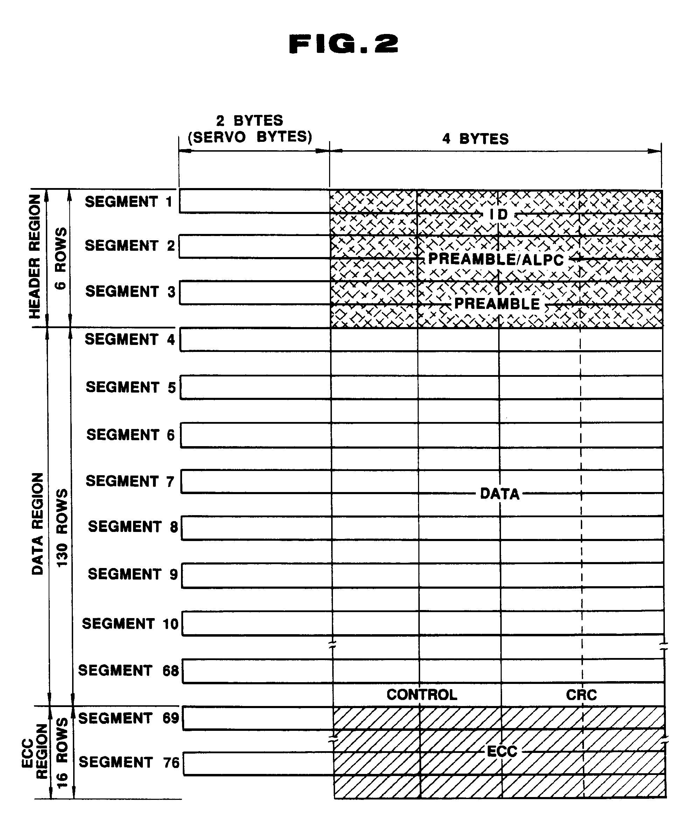

The above one sector is organized as shown in Fig. 2, in which the header region is formed by six rows. The segment 1 of the header region is constituted by the 2-byte servo bytes and a 2 x 4 byte identification label ID including 2-byte sector marks, while the segment 2 is constituted by the servo bytes and the preamble/ALPC and the segment 3 by the servo bytes and the preamble. The data region is constituted by servo bytes and 2 x 3 byte data in 130 rows. The segment 68 includes 2 bytes of control data and CRC data. The ECC region is constituted by servo bytes and 2 x 4 bytes of ECC data in 16 rows.

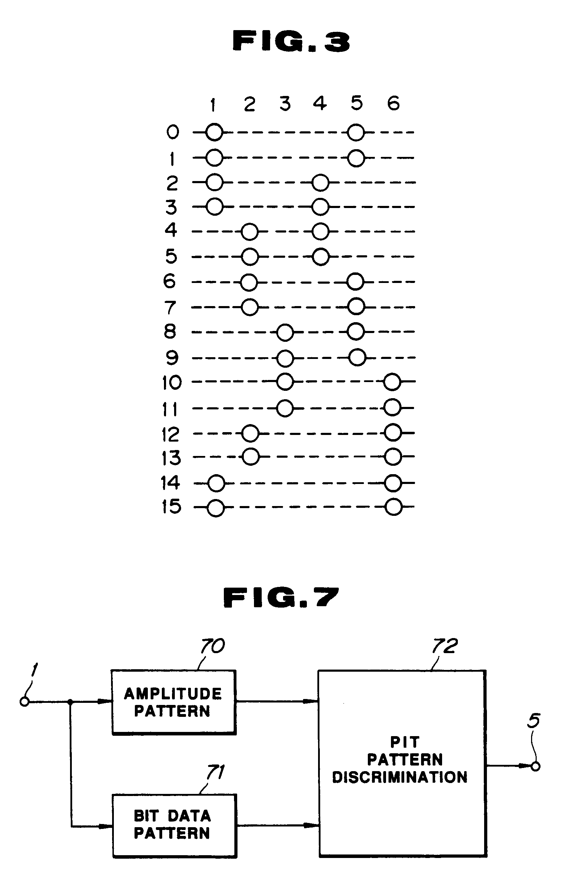

The two pits of the gray code of the servo bytes are recorded at a period of 16 tracks, as shown for example in Fig. 3.

In an 3.5 inch magneto-optical disk, on which data are recorded in accordance with the above mentioned 4-11 modulation system, the bit data obtained upon reading the sector mark pits P_{SM} constituting the sector marks are "10010010001001". For distinction from the pits for data recording on the disk, the pit data are recorded using a pattern not usually existing in the data region.

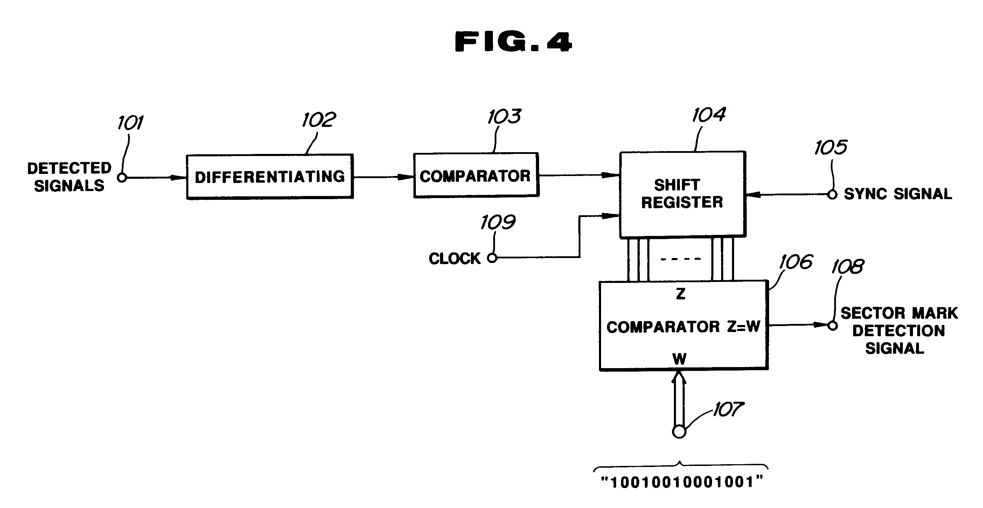

The circuit for detecting the pit pattern of the sector marks, a circuit shown in Fig. 4 is employed. Referring to Fig. 4, detection signals read for example from a magneto-optical disk as the disk-shaped recording medium are input to an input terminal 101. The detected signal is differentiated by a differentiating circuit 102 and processed in a comparator 103 so as to be converted at a predetermined threshold level into a rectangular wave signal which is transmitted to a shift register 104. A sync signal and a reference clock signal are transmitted to the shift register 104 via input terminals 105 and 109, respectively, so that a signal Z produced by synchronization by the sync signal and shifting from the rectangular wave signal on the basis of the reference clock is transmitted to a comparator 106. A bit data pattern W of "10010010001001" is supplied to the comparator 106 via input terminal 107. A sector mark detection signal is output via output terminal 108 when Z = W = "10010010001001".

Referring to Fig. la, the servo bytes and the sector mark are connected in the above format, and a pattern consisting of 14 bit intervals or 13 "0" bits between the servo bytes and the sector marks, that is a unique pattern, is formed. By detecting the unique pattern, the servo bytes may be detected once for each sector. The actual servo bytes can be detected by the circuit having the construction similar to that of Fig. 4 when the data to be compared in the comparator 106 is the bit data pattern "100000000000001".

EP-A-0 278 006 discloses such a device which is capable of detecting a bit data pattern from detection signals from a disk, whereby predetermined pits are recorded with an offset of a predetermined interval with respect to the center of a recording track. This apparatus provides means for detecting the tracking error detecting pit pattern on the basis of the bit data pattern.

In general, when the data recorded on a disk is modulated, the capacity that may be recorded on a disk becomes lesser than in the case of unmodulated data. For this reason, when a disk-shaped recording medium, such as read-only-memory (ROM) type medium, on which unmodulated data are recorded for increasing the disk recording capacity, is prepared and reproduced, there is the risk that the pits of the same pattern as the sector mark be recorded in the data region. In such case, the sector mark pattern cannot be detected accurately.

Although there is one servo byte in each segment as shown in Fig. 1c, the servo bytes found by detecting a pattern which is connected to the sector mark and which is not found in the 4-11 modulation system as described above appears only once in each sector. Therefore, if the PLL which performs capturing by detecting the clock pit P_{CK} of the servo byte during disk reproduction should be disengaged, re-capturing is not feasible unless after passage of one or more sectors.

### OBJECT AND SUMMARY OF THE INVENTION

It is an object of the present invention to provide a method for detecting a pit pattern whereby the servo bytes and even the sector mark may be detected reliably even on the occasion of detecting or reproducing a disk on which data are previously recorded without modulation.

With the method for detecting the pit pattern according to the present invention, predetermined pits to be detected are recorded with a predetermined radial offset from the track center and detected on the basis of a bit data pattern and an amplitude pattern of the detection signal.

The above mentioned predetermined pit pattern may also be used for tracking servo or as at least a portion of the sector mark.

According to the present invention, pits recorded with a predetermined radial offset from the track center are detected and a pit pattern may be detected when the bit data and the amplitude of the detection signals of the pits represent a predetermined pattern at the time of detection. The servo bytes may be detected accurately by employing the pit pattern for tracking servo, whereas the sector mark may be reliably detected by constituting the sector mark by this pit pattern. That is, the pits recorded with a predetermined radial offset from the track center are detected, and the pit pattern is detected from the bit data pattern and the amplitude pattern of the detection signals of these pits at the time of detection, so that it becomes possible to reproduce a disk on which data are recorded without modulation to thereby increase the disk storage capacity.

By employing the pit pattern for tracking servo or constituting the sector mark by the pit pattern, the servo byte or the sector marks may be detected accurately even with a disk-shaped recording medium on which data are recorded without modulation, and the pattern may be detected for each servo byte, so that capturing of the PLL may be achieved more expeditiously.

### BRIEF DESCRIPTION OF THE DRAWINGS

Fig. 1 shows pit and block formats on a disk.

Fig. 2 shows a detailed block format of a sector.

Fig. 3 is a partially enlarged view of a disk showing gray code pits for 16 consecutive tracks.

Fig. 4 is a circuit diagram showing a conventional pit pattern detection circuit.

Fig. 5 is a partially enlarged view of a disk showing the tracking and clock pits and the laser beam paths when the pit pattern is used for tracking servo.

Fig. 6 is a waveform diagram showing the pit signal detection waveform for each laser beam path.

Fig. 7 is a functional block diagram showing a basic arrangement for pit pattern detection.

Fig. 8 is a circuit diagram showing a pit pattern detection circuit for servo byte detection.

Fig. 9 is a partially enlarged view of a disk showing each sector mark pit and the laser beam paths when the pit pattern constitutes a sector mark.

Fig. 10 is a waveform diagram showing the pit signal detection waveform in each laser beam path.

Fig. 11 is a circuit diagram showing a pit pattern detection circuit for sector mark detection.

### DESCRIPTION OF THE PREFERRED EMBODIMENT

By referring to the accompanying drawings, a preferred embodiment of the present invention will be explained in detail.

The optical disk employed in the following embodiment in an optical disk on which data have been recorded without modulation for increasing the memory capacity. In the present embodiment, an optical disk of, for example, the read only memory (ROM) type on which data are directly recorded as, for example, NRZ signals without modulation, is to be reproduced.

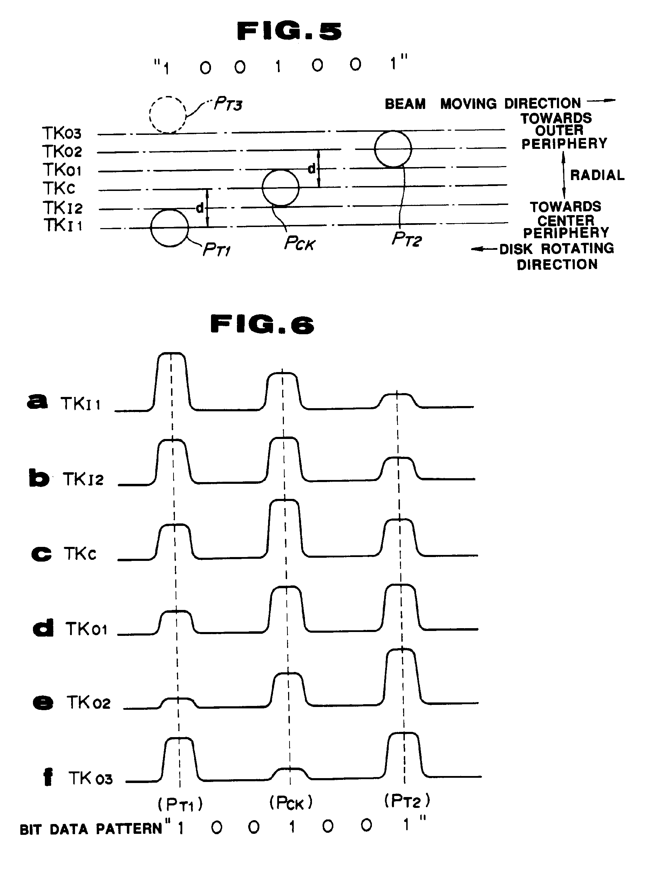

Fig. 5 shows an example in which a predetermined pit pattern to be detected is applied to tracking servo pits.

Referring to Fig. 5, a clock pit P_{CK} is formed on a track center T_{kc}, while a tracking pit P_{T1} is formed at a temporally preceding position, that is, at a position previously traversed by the laser beam with rotation of the optical disk, which is radially offset a predetermined interval d from the track center T_{kc} towards the disk center and a tracking pit P_{T2} is formed at a temporally succeeding position, that is at a position subsequently traversed by the laser beam, which is offset a predetermined interval d from the track center T_{kc} towards the outer periphery of the disk. These wobbled tracking pits P_{T1}, P_{T2} and clock pit P_{ck} represent the pit data pattern "1001001". The pattern of the tracking pits P_{T1}, P_{T2} and the clock pit P_{ck} is read by an optical pickup device.

For achieving accurate tracking servo, the laser beam from the optical pick device must pass through the track center T_{kc} in Fig. 5. However, before tracking servo application, the laser beam may not necessarily pass through the track center T_{kc} but may pass through any arbitrary path. Assuming that the laser beam passes through any one of laser paths Tₖ₁₁, Tₖ₁₂, T_{kc} (track center), Tₖ₀₁, Tₖ₀₂ or Tₖ₀₃, the signal detection waveforms read by the laser beam passing through these laser beam paths are as shown in Figs. 6a to 6f.

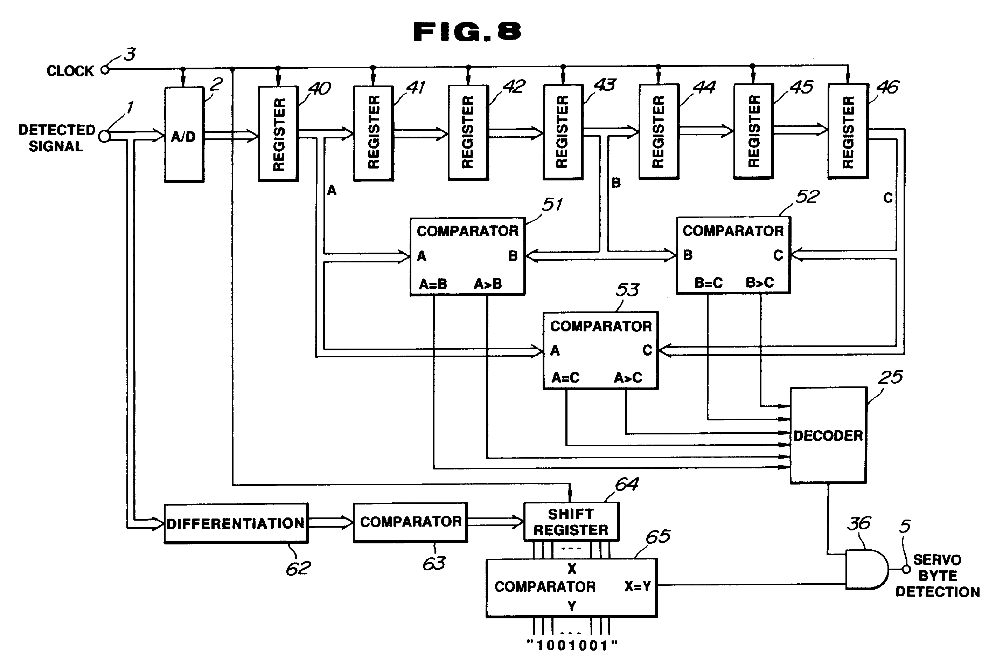

That is, Fig. 6a shows a signal detection waveform when the laser beam passes through the laser beam path Tₖ₁₁. In this waveform, the signal detection waveform of the track pit P_{T1} has a large amplitude, that of the clock pit P_{ck} has a medium amplitude and that of the tracking pit P_{T2} has a small amplitude. In Fig. 6b when the laser beam passes through the laser beam path Tₖ₁₂, the waveform of the tracking pit P_{T1} has an amplitude approximately equal to that of the clock pit P_{ck}, while the waveform of the tracking pit P_{T2} has a smaller amplitude. In Fig. 6c when the laser beam passes through the laser beam path T_{kc}, the waveform of the clock pit P_{ck} has an amplitude larger than that of the waveform of P_{T1} and that of the waveform P_{T2} which are approximately equal to each other. In Fig. 6d when the laser beam passes through the laser beam path Tₖ₀₁, the waveform of P_{CK} has an amplitude approximately equal to that of P_{T2} while the waveform of P_{T1} has a smaller amplitude. In Fig. 6e when the laser beam passes through the laser beam path Tₖ₀₂, the waveform of the track pit P_{T2} has a large amplitude, that of the clock pit P_{CK} has a medium amplitude and that of the tracking pit P_{T1} has a smaller amplitude. In Fig. 6f when the laser beam passes through the laser beam path Tₖ₀₃, the laser beam also reads a tracking pit P_{T3} of the servo byte of the adjacent track. In this case, the waveform of the track pit P_{T3} has an amplitude approximately equal to the amplitude of that of the track pit P_{T2}, while the waveform of the track pit P_{CK} has a smaller amplitude. The operation of pit pattern detection is explained by referring to a functional block diagram of Fig. 7.

In this figure, the above mentioned detection signals are supplied to the input terminal 1 and thence to a amplitude pattern detection block 70 and to a bit data pattern detection block 71. In the amplitude pattern detection block 70, amplitude data of the detection signal waveforms are taken out and compared to one another and, when any one of these signal waveforms present an amplitude pattern shown in one of Figs. 6a to 6f, a signal indicating that the amplitude pattern has been detected is transmitted to a pit pattern discrimination block 72. Simultaneously, in the pit data pattern detection block 71, bit data are taken out from the detection signal and the pattern of the bit data of the detection signal is compared with the servo byte pit data pattern ("1001001"). When the bit data pattern of the detection signal is equal to the servo byte bit data pattern, the detection block 71 transmits a signal indicating that the servo byte bit data pattern has been detected to the pit pattern discrimination block 72. That is, when the output of the block 70 and that of the block 71 are supplied to the block 72, it is determined by block 72 that the bit data pattern of the detection signal is the same as the servo byte pit pattern. The data pattern "1001001" in the data per se is presented with an equal amplitude of the high level signal and is not detected at the amplitude pattern detection block 70, so that it is not confused with the servo byte hit pattern shown in Fig. 5.

A typical circuit for detecting the pit pattern by applying the above mentioned pit pattern detecting method is shown in Fig. 8.

In this figure, a detection signal read at the optical pickup device from the optical disk is input to an input terminal 1. This detection signal is converted by an A/D converter 2 into digital wave height data which are sequentially transmitted to registers 40 to 46. To each of these registers 40 to 46, there are supplied from an input terminal 3 reference clocks which serve not only as bit clocks but also as channel clocks. Based on these reference clocks, the registers 40 to 46 take out amplitude data of the waveforms of the above mentioned detection signals. Amplitude date. A taken out from register 40 and amplitude data B taken out from register 43 are transmitted to a comparator 51, whereas the amplitude data B from register 43 and amplitude data C from register 46 are transmitted to a comparator 52 and the amplitude data A from register 40 and the amplitude data C from register 46 are transmitted to a comparator 53. The comparator 51 compares the amplitude A and B to transmit a predetermined signal, such as "H", to a decoder 25, when the result of comparison is A=B or A>B, whereas the comparators 52 and 53 transmit a prescribed signal, such as "H", to the decoder 25 when the result of comparison of the amplitude data B and C is B=C or B>C and when the result of comparison of the amplitude data A and C is A=C or A>C, respectively. The decoder 25 thus transmits the signal, such as "H", based on the result of comparison from the comparators 51 to 53, to an input terminal of AND gate 36.

The detection signal is also differentiated by a differentiator 62 and converted by a comparator 63 into a rectangular wave signal at a predetermined threshold level so as to be then transmitted to a shift register 64. This shift register 64 is supplied from input terminal 3 with a reference clock, on the basis of which a signal X shifted from the rectangular signal is generated and transmitted to a comparator 65. This comparator is supplied with a bit data pattern Y "1001001". The comparator 65 transmits, when X=Y="1001001", a signal, such as "H", to an input terminal of the AND gate 36.

Hence, when X=Y at the comparator 65 with the bit data pattern Y="1001001" supplied thereto, the signal such as "H" signal is output from comparator 65. When the output signal of the decoder 25 is "H", the AND gate 36 takes the AND to output the logical product signal at output terminal 5 as a servo byte detection signal.

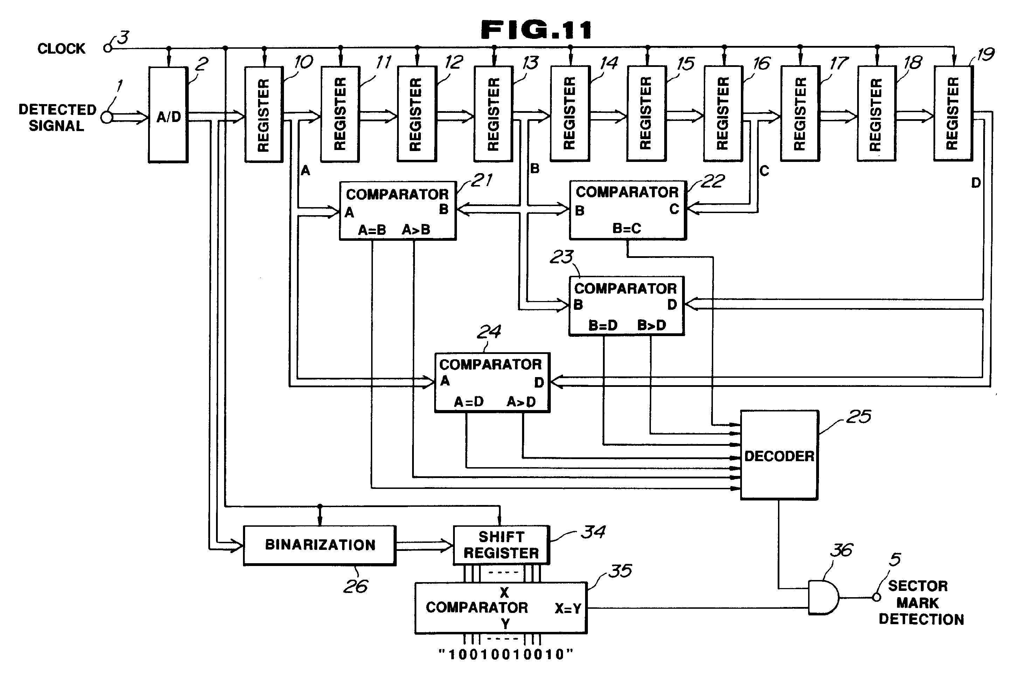

The differentiator circuit 62 and the comparator 63 may also be constituted by a binary circuit 26 as will be described with reference to Fig. 11. The signal supplied to the binary circuit 26 is the output signal from the A/D converter 2.

By way of a second embodiment, an example in which a predetermined pit pattern to be detected constitutes a sector sector will be explained.

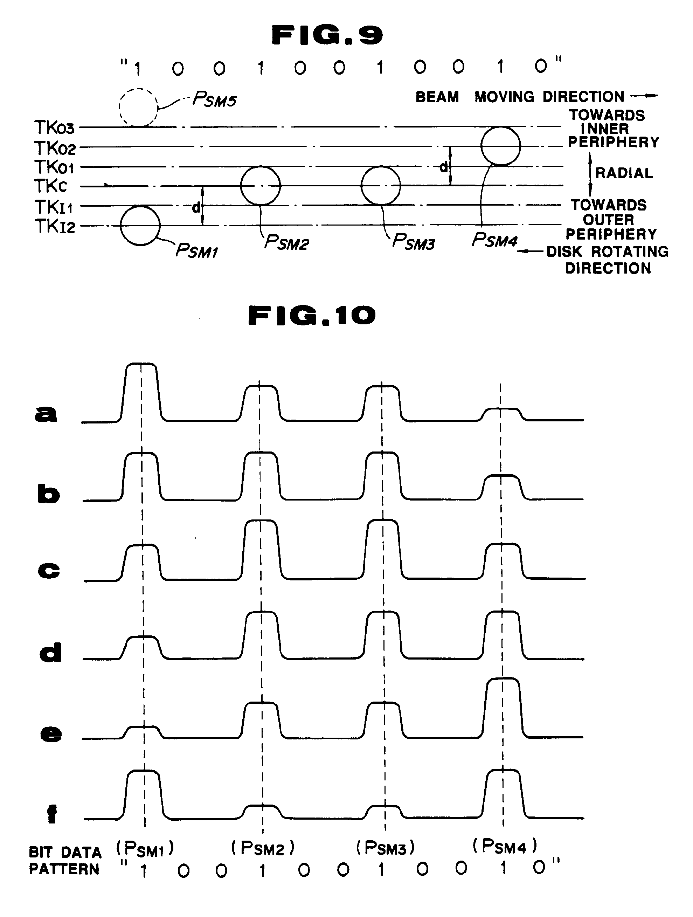

An optical disk of, for example, a read only memory type is employed, as in the preceding embodiment, on which data are recorded as NRZ signal, for example, without modulation. When the sector mark pits are formed with wobbling with respect to the track center T_{kc}, several combinations may be conceived of those pits which are wobbled with respect to the track center T_{kc}. A combination of sector mark pits P_{SM1}, P_{SM2}, P_{SM3} and P_{SM4} shown in Fig. 9 is herein explained by way of an example.

Referring to Fig. 9, sector mark pit P_{SM2}, P_{SM3} are formed on the track center T_{kc}, while a sector mark pit P_{SM1} is formed at a position temporally preceding the sector mark pit P_{SM2}, that is a position traversed by the laser beam at an earlier time point with rotation of the optical disk, which position is offset a predetermined distance d radially towards the disk center, and a sector mark pit P_{SM4} is formed at a position temporally succeeding the sector mark pit P_{SM3}, which position is offset a predetermined interval d towards the outer periphery from the track center T_{kc}. These wobbled sector mark pits P_{SM1}, P_{SM2}, P_{SM3} and P_{SM4} represent at bit data pattern "10010010010". A sector mark bit P_{SM5} is a sector mark pit of an adjacent track.

For correctly reading the sector mark, the laser beam must needs pass through the track center T_{kc} of Fig. 9. However, as stated hereinabove, the laser beam may not necessarily pass through the track center T_{kc}, but may pass through any arbitrary path. For example, assuming that the laser beam passes through one of laser beam paths Tₖ₁₁, Tₖ₁₂, T_{kc} (track center), Tₖ₀₁, Tₖ₀₂ or Tₖ₀₃, as shown in Fig. 9, the signal detection waveforms read by the laser beam passing through the laser beam paths are such as shown in Figs. 10a to 10f.

Thus, Fig. 10a shows the detection pit pattern which is produced when the laser beam passes through laser beam path Tₖ₁₁, Fig. 10b the detection pit pattern which is produced when the laser beam passes through laser beam path Tₖ₁₂, Fig. 10c the detection pit pattern which is produced when the laser beam passes through laser beam path T_{kc}, Fig. 10d the detection pit pattern which is produced when the laser beam passes through laser beam path Tₖ₀₁, Fig. 10e the detection pit pattern which is produced when the laser beam passes through laser beam path Tₖ₀₂ and Fig. 10f the detection pit pattern which is produced when the laser beam passes through laser beam path Tₖ₀₃.

For finding the sector mark, the sector mark pits P_{SM1}, P_{SM2}, P_{SM3} and P_{SM4} are detected on the basis of the amplitude pattern and the bit data pattern of the detection signals, as described hereinabove. That is, each of the signal detection waveforms of the sector mark pits P_{SM1}, P_{SM2}, P_{SM3} and P_{SM4} presents amplitudes or heights of the signal detection waveforms shown in Figs. 10a to 10f characteristic of the laser beam paths Tₖ₁₁, Tₖ₁₂, T_{kc}, Tₖ₀₁, Tₖ₀₂ or Tₖ₀₃ assumed by the laser beam. Therefore, the signal detection waveform is detected to be the sector mark when it exhibits one of the amplitude patterns shown in Figs. 10a to 10f. Alternatively, the signal detection waveform is detected to be the sector mark when on comparing the bit data of the signal detection waveform with the sector mark bit data pattern "10010010010" the bit data of the signal detection waveform is "10010010010" as is the sector mark bit data pattern.

A pit pattern detection circuit for detecting the pit pattern according to the second embodiment is shown in Fig. 11.

In this figure, a detection signal is input to input terminal 1 and converted by A/D converter 2 into digital wave height value data which are sequentially transmitted to registers 10 to 19. To each of these registers 10 to 19, these are supplied from input terminal 3 reference clocks, based on which amplitude data of the detection signal waveforms are taken out. The amplitude data A taken out at the register 10 and the amplitude data B taken out at the register 13 are transmitted to a comparator 21, the amplitude data B from the register 13 and the amplitude data C from the register 16 are transmitted to a comparator 22, the amplitude data B from the register 13 and the amplitude data D from the register 19 are transmitted to a comparator 23 and the amplitude data A from the register 10 and the amplitude data D from the register 19 are transmitted to a comparator 24. The comparator 21 compares the amplitude data A and B and, when the result of comparison is A=B or A>B, it transmits a predetermined signal, such as "H" signal, to the decoder 25. The comparators 22, 23 and 24 transmit a predetermined signal, such as "H" signal, to the decoder 25 when the results of comparison of the amplitude data B-C, B-D and A-D are B=C, B=D or B>D, and A=D or A>D, respectively. The decoder 25 thus transmits a signal, such as signal "H", based on the results of comparison from the comparators 21 to 24, to an input terminal of the AND gate 36.

On the other hand, the above mentioned wave height data are converted by a binary circuit 26, operating at the timing of reference clocks, into bit data, which are transmitted to a shift register 34. The reference clocks are supplied from input terminal 3 to the shift register 34, and a signal X produced by shifting the output of the binary circuit 26 on the basis of the reference clocks is transmitted to a comparator 35. A bit data pattern Y of "10010010010" is supplied to the comparator 35, which transmits a signal, such as "H" signal, when X=Y="10010010010", to the input terminal of the AND circuit 36.

Therefore, when bit data Y=10010010010" is supplied in the comparator 35, X=Y and the signal "H" is output from the comparator 35. When the output signal from the decoder 25 is also "H", the AND gate 36 taken the AND and outputs the resulting logical product signal to the output 5 as the servo byte detection signal.

The binary circuit 26 may be constituted by the differentiating circuit 62 and the comparator 63 as already described with reference to Fig. 8. It is the detection signal that is supplied in this case to the differentiating circuit 62 and the comparator 63.

If the circuit of the above described second embodiment is used, the servo bytes connected to the sector mark may also be detected in each sector.

## Claims

1. An apparatus for detecting a predetermined pit pattern from detection signals from a disk having predetermined pits recorded with an offset of a predetermined interval with respect to the center of recording track (T_{Kc}) and means for detecting the predetermined pit pattern on the basis of the bit data pattern, **characterized in that** said apparatus comprises means for detecting the predetermined pit pattern on the basis of the amplitude pattern of detection signals obtained upon detecting said disk.

2. The apparatus according to claim 1, **characterized in that** said predetermined pit pattern is a tracking error detecting pit pattern and the detection signals from the disk have tracking error detecting pits (P_{T1}, P_{T2}).

3. The apparatus according to claim 1, **characterized in that** the predetermined pit pattern is a sector mark and the detection signals from the disk have sector mark detecting pits (P_{SM1}, P_{SM2}, P_{SM3}, P_{SM4}).

4. The apparatus according to claims 2 or 3, wherein said detection means comprises bit data pattern detection means (62 to 65; 26, 34, 35) for detecting if the bit data pattern of said detection signal is the predetermined bit data pattern, and amplitude pattern detection means (40 to 46, 51 to 53: 10 to 19, 21 to 25) for detecting if the amplitude pattern of the detection signal is the predetermined amplitude pattern.

5. The apparatus according to claim 4 wherein said detection means comprise pit pattern discriminating means (65, 25, 36; 25, 35, 36) for discriminating if said detection signal is of the predetermined pit pattern on the basis of the detection output from said bit data pattern detection means and the detection output from said amplitude pattern detection means.

6. The apparatus according to claim 4 wherein said amplitude pattern detection means (40 to 46, 51 to 53; 10 to 19, 21 to 25) is so designed as to take out and compare a plurality of amplitude data of the digitized detection signal on the basis of reference clocks (3) to detect if this data are predetermined amplitude data, and wherein said bit data pattern detection means (62 to 65; 26, 34, 35) are so designed as to convert said digitized detection signal into a bit data pattern and to compare said digitized detection signal with a predetermined reference bit data pattern to detect if the digitized detection signal is of the predetermined bit data pattern.

7. The apparatus according to claim 6 wherein said amplitude pattern detection means comprises a plurality of registers (40 to 46; 10 to 19) for taking out amplitude data of the digitized detection signal on the basis of reference clocks (3), comparator means (51 to 53; 21 to 24) for comparing amplitude data taken out by said registers, and decoding means (25) supplied with the comparison output of said comparator means, and wherein said bit data pattern detection means comprises converting means (26) for converting said digitized detection signal into a bit data pattern and a comparator (65; 35) for comparing the bit data pattern from said converting means with a predetermined reference bit data pattern.

8. The apparatus according to any preceeding claim, **characterized in that** the apparatus is provided in a recording and/or reproducing apparatus on or from the disk, and that the disk is an optical disk, with an optical head adapted for recording and/or reproducing data signals on or from said optical disk.

9. A method for detecting a pit pattern comprising detecting sector mark detecting pits (P_{SM1}, P_{SM2}, P_{SM3}, P_{SM4}) from a detection signal from a disk, on which predetermined pits to be detected are recorded with an offset of a predetermined interval with respect to the center (T_{Kc}) of a recording track, on the basis of a bit data pattern of the detection signal obtained upon detecting said disk, **characterized by** detecting the sector mark detecting pits on the basis of an amplitude pattern of the detection signal.

10. The method according to claim 9 wherein said predetermined pit is a tracking error detecting pit.

11. The method according to claim 9 wherein said predetermined pit is a sector mark detecting pit.

## Patentansprüche

1. Vorrichtung zum Erkennen eines vorbestimmten Pitmusters aufgrund von Abtastungssignalen von einer Platte, auf der vorbestimmte Pits um ein vorbestimmtes Intervall in Relation zur Mitte einer Aufzeichnungsspur (T_{Kc}) versetzt gespeichert sind, und mit einer Einrichtung zum Bestimmen des vorbestimmten Pitmusters aufgrund des Bitdatenmusters, **dadurch gekennzeichnet**, daß die Vorrichtung eine Einrichtung zum Erkennen des vorbestimmten Pitmusters aufgrund des Amplitudenmusters der durch Abtasten der Platte erhaltenen Abtastungssignale aufweist.

2. Vorrichtung nach Anspruch 1, **dadurch gekennzeichnet**, daß das vorbestimmte Pitmuster ein Spurfehlererkennungs-Pitmuster ist und daß die Abtastungssignale von der Platte Spurfehlererkennungs-Pits (P_{T1}, P_{T2}) aufweisen.

3. Vorrichtung nach Anspruch 1, **dadurch gekennzeichnet**, daß das vorbestimmte Pitmuster eine Sektormarkierung ist und daß die Abtastungssignale von der Platte Sektormarkierungserkennungs-Pits (P_{SM1}, P_{SM2}, P_{SM3}, P_{SM4}) aufweisen.

4. Vorrichtung nach Anspruch 2 oder 3, **dadurch gekennzeichnet**, daß die Erkennungseinrichtung eine Bitdatenmuster-Erkennungseinrichtung (62 bis 65; 26, 34, 35) zum Erkennen, ob das Bitdatenmuster des Abtastungssignals das vorbestimmte Bitdatenmuster ist, sowie eine Amplitudenmuster-Erkennungseinrichtung (40 bis 46, 51 bis 53; 10 bis 19, 21 bis 25) zum Erkennen, ob das Amplitudenmuster des Abtastungssignals das vorbestimmte Amplitudenmuster ist, aufweist.

5. Vorrichtung nach Anspruch 4, **dadurch gekennzeichnet**, daß die Erkennungseinrichtung eine Pitmuster-Diskriminierungseinrichtung (65, 25, 36; 25, 35, 36) aufweist zum Diskriminieren auf Basis der Erkennungsausgangssignale der Bitdatenmuster-Erkennungseinrichtung und der Amplitudenmuster-Erkennungseinrichtung, ob das Abtastungssignal das vorbestimmte Pitmuster ist.

6. Vorrichtung nach Anspruch 4, **dadurch gekennzeichnet**, daß die Amplitudenmuster-Erkennungseinrichtung (40 bis 46, 51 bis 53; 10 bis 19, 21 bis 25) so gestaltet ist, daß eine Mehrzahl von Amplitudendaten des digitalisierten Abtastungssignals auf Basis von Referenztaktsignalen (3) abgreifbar und vergleichbar sind, um zu erkennen, ob diese Daten die vorbestimmten Amplitudendaten sind, und daß die Bitdatenmuster-Erkennungseinrichtung (62 bis 65; 26, 34, 35) so gestaltet ist, daß das digitalisierte Abtastungssignal in ein Bitdatenmuster konvertierbar und mit einem vorbestimmten Referenz-Bitdatenmuster vergleichbar ist, um zu erkennen, ob das digitalisierte Abtastungssignal dem vorbestimmten Bitdatenmuster entspricht.

7. Vorrichtung nach Anspruch 6, **dadurch gekennzeichnet**, daß die Amplitudenmuster-Erkennungseinrichtung eine Mehrzahl von Registern (40 bis 46; 10 bis 19) zumAbgreifen von Amplitudendaten von dem digitalisierten Abtastungssignal auf Basis der Referenztaktsignale (3) aufweist, sowie einen Komparator (51 bis 53; 21 bis 24) zum Vergleichen der von den Registern abgegriffenen Amplitudendaten und eine mit dem Vergleichsausgangssignal des Komparators beaufschlagte Dekodiereinrichtung (25), und daß die Bitdatenmuster-Erkennungseinrichtung eine Konvertiereinrichtung (26) zum Konvertieren des digitalisierten Abtastungssignals in ein Bitdatenmuster sowie einen Komparator (65; 35) zum Vergleichen des Bitdatenmusters von der Konvertiereinrichtung mit einem vorbestimmten Referenzbitdatenmuster aufweist.

8. Vorrichtung nach einem der vorstehenden Ansprüche, **dadurch gekennzeichnet**, daß die Vorrichtung in einem Aufzeichnungs- und/oder Wiedergabegerät für Platten vorgesehen ist, daß die Platte eine optische Platte ist und daß ein optischer Kopf vorgesehen ist zum Aufzeichnen und/oder Wiedergeben von Datensignalen auf die oder von der optischen Platte.

9. Verfahren zum Erkennen eines Pitmusters mit dem Schritt Erkennen von Sektormarkierungserkennungs-Pits (P_{SM1}, P_{SM2}, P_{SM3}, P_{SM4}) in einem Abtastungssignal von einer Platte, auf der zu erkennende vorbestimmte Pits um ein vorbestimmtes Intervall in Relation zur Mitte (T_{Kc}) einer Aufzeichnungsspur versetzt aufgezeichnet sind, auf Basis eines Bitdatenmusters des durch Abtasten der Platte erhaltenen Abtastungssignals, **gekennzeichnet durch** das Bestimmen der Sektormarkierungserkennungs-Pits aufgrund eines Amplitudenmusters des Abtastungssignals.

10. Verfahren nach Anspruch 9, **dadurch gekennzeichnet**, daß das vorbestimmte Pit ein Spurfehlererkennungs-Pit ist.

11. Verfahren nach Anspruch 9, **dadurch gekennzeichnet**, daß das vorbestimmte Pit ein Sektormarkierungserkennungs-Pit ist.

## Revendications

1. Un appareil pour détecter une configuration de cavités prédéterminée à partir de signaux provenant d'un disque ayant des cavités prédéterminées enregistrées avec un décalage d'un intervalle prédéterminé par rapport au centre d'une piste d'enregistrement (T_{Kc}) et des moyens pour détecter la configuration de cavités prédéterminée sur la base de la configuration de données de bit, caractérisé en ce que cet appareil comprend des moyens pour détecter la configuration de cavités prédéterminée sur la base de la configuration d'amplitude de signaux de détection qui sont obtenus au moment de la détection du disque.

2. L'appareil selon la revendication 1, caractérisé en ce que la configuration de cavités prédéterminée est une configuration de cavités de détection d'erreur de suivi de piste et les signaux de détection provenant du disque correspondent à des cavités de détection d'erreur de suivi de piste (PT₁, P_{T2}).

3. L'appareil selon la revendication 1, caractérisé en ce que la configuration de cavités prédéterminée est une marque de secteur et les signaux de détection provenant du disque correspondent à des cavités de détection de marque de secteur (P_{SM1}, P_{SM2}, P_{SM3}, P_{SM4}).

4. L'appareil selon les revendications 2 ou 3, dans lequel les moyens de détection comprennent des moyens de détection de configuration de données de bit (62 à 65; 26, 34, 35) pour détecter si la configuration de données de bit du signal de détection est la configuration de données de bit prédéterminée, et des moyens de détection de configuration d'amplitude (40 à 46, 51 à 53; 10 à 19, 21 à 25) pour détecter si la configuration d'amplitude du signal de détection est la configuration d'amplitude prédéterminée.

5. L'appareil selon la revendication 4, dans lequel les moyens de détection comprennent des moyens de discrimination de configuration de cavités (65, 25, 36; 25, 35, 36) pour déterminer si le signal de détection est celui correspondant à la configuration de cavités prédéterminée, sur la base de l'information de sortie de détection des moyens de détection de configuration de données de bit et de l'information de sortie de détection des moyens de détection de configuration d'amplitude.

6. L'appareil selon la revendication 4, dans leque les moyens de détection de configuration d'amplitude (40 à 46, 51 à 53; 10 à 19, 21 à 25) sont conçus de façon à extraire et à comparer un ensemble de données d'amplitude du signal de détection numérisé, sur la base d'horloges de référence (3), pour détecter si ces données sont des données d'amplitude prédéterminées, et dans lequel les moyens de détection de configuration de données de bit (62 à 65; 26, 34, 35) sont conçus de façon à convertir le signal de détection numérisé en une configuration de données de bit et à comparer le signal de détection numérisé avec une configuration de données de bit de référence prédéterminée, pour détecter si le signal de détection numérisé présente la configuration de données de bit prédéterminée.

7. L'appareil selon la revendication 6, dans lequel les moyens de détection de configuration d'amplitude comprennent un ensemble de registres (40 à 46; 10 à 19) pour extraire des données d'amplitude du signal de détection numérisé, sur la base d'horloges de référence (3), des moyens comparateurs (51 à 53; 21 à 24) pour comparer des données d'amplitude extraites par les registres, et des moyens de décodage (25) qui reçoivent l'information de sortie de comparaison des moyens comparateurs, et dans lequel les moyens de détection de configuration de données de bit comprennent des moyens de conversion (26) pour convertir le signal de détection numérisé en une configuration de données de bit, et un comparateur (65; 35) pour comparer la configuration de données de bit provenant des moyens de conversion avec une configuration de données de bit de référence prédéterminée.

8. L'appareil selon l'une quelconque des revendications précédentes, caractérisé en ce qu'il est incorporé dans un appareil d'enregistrement sur le disque et/ou de reproduction à partir du disque, et en ce que le disque est un disque optique, avec une tête optique conçue pour enregistrer des signaux de données sur le disque optique, et/ou pour reproduire des signaux de données à partir du disque optique.

9. Un procédé pour détecter une configuration de cavités comprenant des cavités de détection de marque de secteur (P_{SM1}, P_{SM2}, P_{SM3}, P_{SM4}) à partir d'un signal de détection provenant d'un disque, sur lequel des cavités prédéterminées à détecter sont enregistrées avec un décalage d'un intervalle prédéterminé par rapport au centre (T_{Kc}) d'une piste d'enregistrement, sur la base d'une configuration de données de bit du signal de détection qui est obtenu au moment de la détection du disque, caractérisé en ce qu'on détecte les cavités de détection de marque de secteur sur la base d'une configuration d'amplitude du signal de détection.

10. Le procédé selon la revendication 9, dans lequel la cavité prédéterminée est une cavité de détection d'erreur de suivi de piste.

11. Le procédé selon la revendication 9, dans lequel la cavité prédéterminée est une cavité de détection de marque de secteur.
